# FASCICULE DE BREVET EUROPEEN

(11) **EP 3 271 675 B1**
(45) Date de publication et mention de la délivrance du brevet: **13.11.2019**
(21) Numéro de dépôt: 16714792.5
(22) Date de dépôt: 21.03.2016
(51) Int. Cl.: F28D 9/00, B60H 1/00, H01M 10/60, F28D 21/00

(54) **ECHANGEUR THERMIQUE ET INSTALLATION DE GESTION THERMIQUE POUR BATTERIES DE VÉHICULE ÉLECTRIQUE OU HYBRIDE**
WÄRMETAUSCHER UND WÄRMEVERWALTUNGSANLAGE FÜR BATTERIEN VON ELEKTRISCHEN ODER HYBRIDFAHRZEUGEN
HEAT EXCHANGER AND THERMAL MANAGEMENT FACILITY FOR BATTERIES OF ELECTRIC OR HYBRID VEHICLES

(30) Priorité: 20.03.2015 FR 1552312
(43) Date de publication de la demande: 24.01.2018
(73) Titulaire: Valeo Systemes Thermiques, 78320 Le Mesnil Saint Denis (FR)
(72) Inventeur: NGUYEN, Dinh-Luyen, 78180 Montigny-le-Bretonneux (FR); ARAB, Karim, 92320 Chatillon (FR); AZZOUZ, Kamel, 75012 Paris (FR); BLANDIN, Jérémy, 78990 Elancourt (FR)
(74) Mandataire: Neuviale, Bertrand
(86) Numéro de dépôt international: PCT/EP2016/056178
(87) Numéro de publication internationale: WO 2016/150925

(56) Documents cités:
- EP-A1- 2 463 612
- WO-A1-2013/092613
- WO-A1-2013/092638
- US-A1- 2010 096 101

## Description

La présente invention concerne un échangeur thermique selon la revendication 1 et une installation de gestion thermique pour batteries de véhicule électrique ou hybride selon la revendication 12.

La régulation thermique des batteries, notamment dans le domaine automobile, doit être particulièrement maîtrisée. En effet, l'autonomie des batteries peut décroitre fortement lorsque les batteries sont soumises à de basses températures. De même, des détériorations peuvent survenir si les batteries sont exposées à des températures trop élevées.

Afin de réguler la température des batteries, on utilise généralement des échangeurs de chaleur utilisant des fluides caloporteurs en contact direct avec les batteries. Les fluides caloporteurs peuvent ainsi absorber de la chaleur émise par la ou les batteries afin de les refroidir et évacuer cette chaleur par exemple au niveau d'un ou plusieurs autre échangeurs thermiques.

Certains échangeurs de chaleur, dits à double circulation de fluide, comportent des premiers et seconds tubes empilés en alternance au contact l'un de l'autre.

Un premier fluide caloporteur circule dans les premiers tubes et un deuxième fluide caloporteur circule dans les seconds tubes. L'échangeur thermique permet ainsi un transfert thermique au travers des tubes entre le premier fluide caloporteur, généralement un fluide réfrigérant, et le deuxième fluide caloporteur, tel que l'eau de refroidissement.

Cependant, l'efficacité de l'échange thermique est limitée par la surface d'échange commune des premiers et seconds tubes.

Egalement, les épaisseurs cumulées des parois des premiers et second tubes génèrent une résistance thermique importante, limitant l'échange thermique.

En outre, un tel échangeur de chaleur peut présenter un poids et un coût importants. Le document WO 2013/092613 A1 décrit un échangeur thermique selon le préambule de la revendication 1.

Un des buts de la présente invention est donc de remédier au moins partiellement aux inconvénients de l'art antérieur en proposant un échangeur thermique et une installation de gestion thermique améliorés.

A cet effet, la présente invention a pour objet un échangeur thermique selon la revendication 1.

Ainsi, le dispositif de circulation d'un premier fluide caloporteur baigne dans le deuxième fluide caloporteur. La surface d'échange thermique est ainsi augmentée. La résistance thermique entre le deuxième fluide caloporteur et le dispositif de circulation d'un premier fluide caloporteur est diminuée. Egalement, le volume, le poids, le nombre de pièces et le coût de l'échangeur thermique sont réduits.

Selon une ou plusieurs caractéristiques de l'échangeur thermique, prises seules ou en combinaison :
- le dispositif de circulation d'un premier fluide caloporteur comporte au moins deux tubes d'échange thermique superposés,
- le tube d'échange thermique forme au moins un demi-tour,
- le premier fluide caloporteur est destiné à circuler en parallèle dans les tubes d'échange thermique superposés,
- les tubes d'échange thermique sont plats,
- le dispositif de circulation d'un premier fluide caloporteur comporte au moins une intercalaire interposée entre deux tubes d'échange thermiques superposés du dispositif de circulation d'un premier fluide caloporteur,
- le dispositif de circulation d'un premier fluide caloporteur comporte au moins une intercalaire interposée entre un tube d'échange thermique et le couvercle du boîtier,
- le dispositif de circulation d'un premier fluide caloporteur comporte au moins une intercalaire interposée entre un tube d'échange thermique et le fond du boîtier,
- l'intercalaire présente une forme générale ondulée,
- l'intercalaire est en contact avec un tube d'échange thermique inférieur et/ou supérieur le long d'une pluralité de lignes rectilignes et parallèles,
- le au moins un orifice pour le passage des entrée et sortie de premier fluide caloporteur est ménagé sur une face du boîtier perpendiculaire à une face latérale dans laquelle sont ménagées l'entrée et/ou la sortie de deuxième fluide caloporteur,
- les entrée et sortie de deuxième fluide caloporteur sont ménagées des faces latérales opposées du boîtier. Ainsi, le deuxième fluide caloporteur s'écoule de façon naturelle depuis l'entrée de deuxième fluide caloporteur jusqu'à la sortie de deuxième fluide caloporteur située en vis-à-vis. La perte de charge du deuxième fluide caloporteur est ainsi réduite.
- les entrée et sortie de deuxième fluide caloporteur sont ménagées sur une même face latérale du boîtier. La circulation du deuxième fluide caloporteur n'est plus naturelle mais forcée en U. On augmente ainsi la durée d'écoulement du deuxième fluide caloporteur dans le boîtier, ce qui améliore l'échange thermique avec le dispositif de circulation d'un premier fluide caloporteur.
- suivant l'invention, le boitier comporte un couvercle et un fond respectivement munis de moyens de fixation complémentaires,
- les moyens de fixation complémentaires sont des moyens de clipsage,
- suivant l'invention, l'échangeur thermique comporte un premier joint annulaire interposé entre le couvercle et le fond du boîtier,
- suivant l'invention une partie de boîtier parmi le fond ou le couvercle présente une extrémité périphérique conformée en U, une première aile du U portant le moyen de fixation, le premier joint annulaire étant interposé entre la deuxième aile du U et l'extrémité périphérique de l'autre partie de boîtier portant le moyen de fixation complémentaire,
- suivant l'invention l'échangeur thermique comporte un deuxième joint annulaire interposé entre l'orifice du boitier et les entrée et sortie de premier fluide caloporteur du dispositif de circulation d'un premier fluide caloporteur.

L'invention a aussi pour objet une installation de gestion thermique pour batteries de véhicule électrique ou hybride suivant la revendication 12.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un premier exemple de réalisation d'un échangeur thermique en perspective et à l'état assemblé,
- la figure 2 montre une vue en coupe selon un plan vertical (L, V) de l'échangeur thermique de la figure 1,
- la figure 3 montre une représentation schématique de l'échangeur thermique de la figure 1 en perspective éclatée,
- la figure 4 montre un exemple de réalisation d'un dispositif de circulation d'un premier fluide caloporteur,
- la figure 5 montre le dispositif de circulation d'un premier fluide caloporteur de la figure 4 sans intercalaires,
- la figure 6 montre une vue agrandie et en coupe d'un détail de l'échangeur thermique de la figure 1,
- la figure 7 montre une vue schématique d'une installation de gestion thermique pour batteries de véhicule électrique ou hybride,
- la figure 8 montre une représentation schématique d'un deuxième exemple de réalisation d'un échangeur thermique en perspective à l'état assemblé,
- la figure 9 montre une vue en coupe selon un plan vertical (L, V) de l'échangeur thermique de la figure 8, et
- la figure 10 montre une représentation schématique de l'échangeur thermique de la figure 8 en perspective éclatée.

Sur ces figures, les éléments identiques portent les mêmes numéros de référence.

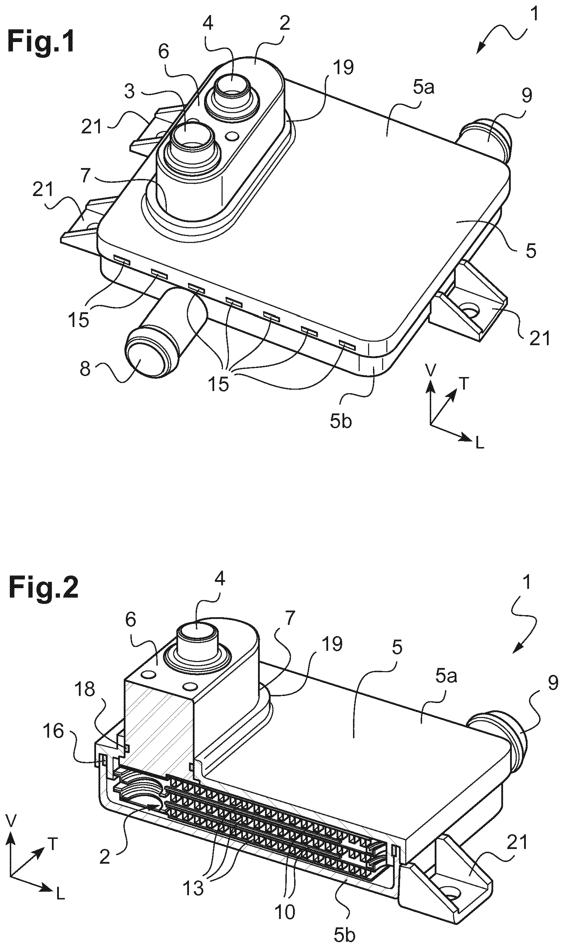

Dans la suite de la description, on adoptera à titre non limitatif des directions longitudinale, verticale et transversale indiquées sur la figure 1 par le trièdre (L, V, T) fixe par rapport à l'échangeur thermique 1,1'.

Les figures 1 à 3 montrent un premier mode de réalisation d'un échangeur thermique 1 par exemple destiné à refroidir et évacuer la chaleur de batteries d'un véhicule électrique ou hybride.

L'échangeur thermique 1 comporte un dispositif de circulation d'un premier fluide caloporteur 2 comportant une entrée de premier fluide caloporteur 3 et une sortie de premier fluide caloporteur 4 entre lesquelles un premier fluide caloporteur est destiné à circuler.

L'échangeur thermique 1 comporte en outre un boîtier 5, par exemple en matériau plastique.

Le boîtier 5 est essentiellement creux et délimite un logement dimensionné pour recevoir le dispositif de circulation d'un premier fluide caloporteur 2. Il présente par exemple une forme parallélépipédique.

Selon un exemple de réalisation, le boîtier 5 est réalisé en deux parties de boîtier, un couvercle 5a et un fond 5b, s'assemblant entre elles selon un plan sensiblement longitudinal médian vertical.

Le boîtier 5 comporte en outre au moins un orifice 7 pour le passage des entrée et sortie de premier fluide caloporteur 3, 4 ainsi qu'une entrée de deuxième fluide caloporteur 8 et une sortie de deuxième fluide caloporteur 9 entre lesquelles un deuxième fluide caloporteur est destiné à circuler.

Le premier fluide caloporteur est par exemple un fluide réfrigérant, tel qu'un hydrocarbure halogéné, tel que le 1,1,1,2-tétrafluoroéthane (également appelé R134a). Le premier fluide caloporteur est par exemple en phase gazeuse ou liquide ou un mélange des deux phases gazeuse et liquide, par exemple sous une pression de l'ordre de 4 ou 5 bars.

Le deuxième fluide caloporteur est par exemple un liquide de refroidissement, tel que de l'eau pouvant contenir un additif comme l'éthylène glycol ou le propylène glycol permettant d'augmenter la température d'ébullition et/ou la résistance au gel.

Ainsi le dispositif de circulation d'un premier fluide caloporteur 2 baigne dans le deuxième fluide caloporteur. La surface d'échange thermique est ainsi augmentée. La résistance thermique entre le deuxième fluide caloporteur et le dispositif de circulation d'un premier fluide caloporteur 2 est diminuée. Egalement, le volume, le poids, le nombre de pièces et le coût de l'échangeur thermique 1 sont réduits.

Mieux visible sur les figures 2 à 5, le dispositif de circulation d'un premier fluide caloporteur 2 comporte par exemple plusieurs tubes d'échange thermique 10 superposés (deux dans l'exemple), par exemple identiques. Le premier fluide caloporteur est destiné à circuler en parallèle dans les tubes d'échange thermique 10 superposés.

Plus précisément, un tube d'échange thermique 10 présente une entrée et une sortie intermédiaires entre lesquelles le premier fluide caloporteur est destiné à circuler. L'entrée de premier fluide caloporteur 3 est raccordée aux entrées intermédiaires des tubes d'échange thermique 10. La sortie de premier fluide caloporteur 4 est raccordée aux sorties intermédiaires des tubes d'échange thermique 10.

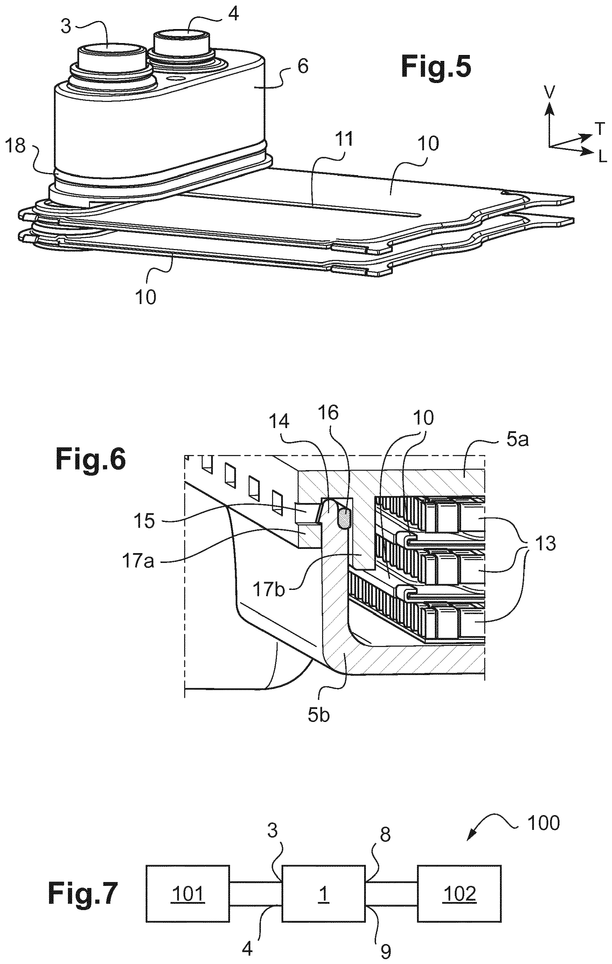

Selon un exemple de réalisation, le tube d'échange thermique 10 forme au moins un demi-tour de sorte que le premier fluide caloporteur s'écoule en « U » ou en une succession de « U » alternés dans chaque tube d'échange thermique 10. Ainsi, sur l'exemple représenté en figure 5, les tubes d'échange thermique 10 superposés sont conformés en U, les entrées et sorties intermédiaires étant situées sur un même côté du tube d'échange thermique 10.

Selon un exemple de réalisation, les tubes d'échange thermique 10 sont plats, ce qui permet un gain de place avec une surface d'échange plus étendue. Ils sont par exemple respectivement formés de deux plaques embouties assemblées ensemble, présentant respectivement une forme générale rectangulaire. Les tubes d'échange thermique 10 en forme de « U » formés de plaques embouties comportent par exemple au moins une séparation centrale 11 dans une direction longitudinale L, séparant l'entrée intermédiaire de la sortie intermédiaire.

Le dispositif de circulation d'un premier fluide caloporteur 2 peut également comporter des intercalaires 13 interposées entre les tubes d'échange thermique 10 superposés, entre le premier tube d'échange thermique 10 et le fond 5b du boîtier 5 et entre le dernier tube d'échange thermique 10 et le couvercle 5a du boîtier 5.

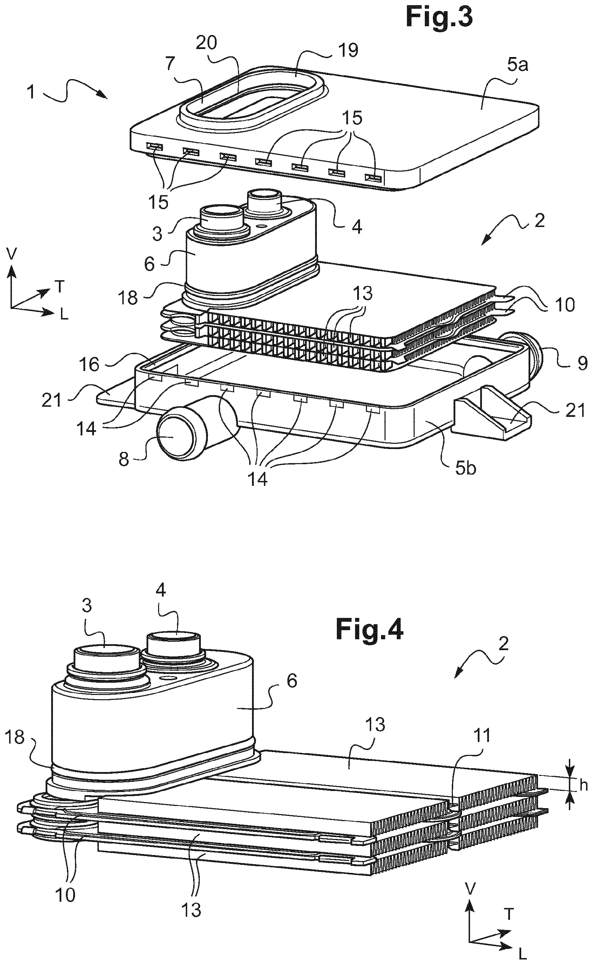

Les intercalaires 13 permettent de ménager un espace volumique entre deux tubes d'échange thermiques 10 adjacents superposés dans lequel le deuxième fluide caloporteur peut circuler. On prévoit par exemple une hauteur h d'intercalaire 13 (ou distance entre deux tubes d'échange thermique 10) comprise entre deux et quatre millimètres de manière à obtenir un diamètre hydraulique compris entre 0,8 et 1 millimètres (figure 4).

On obtient ainsi une pile alternant tubes d'échange thermique 10 et intercalaires 13. Ainsi, dans l'exemple illustré en figure 2, l'échangeur thermique 1 comporte trois intercalaires 13 et deux tubes d'échange thermiques 10 agencés en alternance entre le couvercle 5a et le fond 5b du boîtier 5b.

L'intercalaire 13 est par exemple en contact avec un tube d'échange thermique 10 inférieur et/ou supérieur le long d'une pluralité de lignes rectilignes et parallèles. Les lignes peuvent s'étendre dans la direction longitudinale L d'écoulement du fluide sur l'exemple des figures 2 et 3 ou s'étendre dans la direction transversale T, perpendiculairement à cette direction longitudinale L (figure 4), ce qui permet d'augmenter encore le temps d'échange thermique et donc la performance de l'échangeur thermique.

Les intercalaires 13 présentent par exemple une forme générale ondulée. Les intercalaires 13 sont par exemple fixées aux tubes d'échange thermique 10 au niveau des crêtes des ondulations.

Les tubes d'échange thermique 10 et les intercalaires 13 sont par exemple en matériau métallique, par exemple en alliage d'aluminium, pour supporter la pression du premier fluide caloporteur. Les tubes d'échange thermique 10 et les intercalaires 13 sont par exemple brasés ensemble.

En plus d'assurer le passage du second fluide caloporteur, les intercalaires 13 permettent d'augmenter la surface d'échange thermique entre le premier fluide caloporteur circulant dans le dispositif de circulation d'un premier fluide caloporteur 2 et le deuxième fluide caloporteur circulant dans le boîtier 5. Les intercalaires 13 permettent également de guider la circulation du deuxième fluide caloporteur depuis l'entrée de deuxième fluide caloporteur 8 vers la sortie de deuxième fluide caloporteur 9.

Une fois les tubes d'échange thermique 10 et les intercalaires 13 assemblés entre eux, le dispositif de circulation d'un premier fluide caloporteur 2 est monobloc, il est donc manipulable et peut être facilement monté dans le boîtier 5 (figure 4).

L'orifice 7 du boîtier 5 pour le passage des entrée et sortie de premier fluide caloporteur 3, 4 présente par exemple une forme oblongue. Les entrée et sortie de premier fluide caloporteur 3, 4 sont par exemple agencées dans une embase 6 monobloc de forme complémentaire.

L'orifice 7 est par exemple ménagé dans une face du boîtier 5 (couvercle 5a ou le fond 5b) perpendiculaire à une face latérale dans laquelle sont ménagées les entrée et sortie de deuxième fluide caloporteur 8, 9.

Les entrée et sortie de deuxième fluide caloporteur 8, 9 peuvent être ménagées sur des faces latérales opposées du boîtier 5 (figure 1). Ainsi, le deuxième fluide caloporteur s'écoule de façon naturelle depuis l'entrée de deuxième fluide caloporteur 8 jusqu'à la sortie de deuxième fluide caloporteur 9 située en vis-à-vis. La perte de charge du deuxième fluide caloporteur est ainsi réduite.

Les entrée et sortie de deuxième fluide caloporteur 8, 9 sont par exemple formées d'une seule pièce avec une partie de boîtier, couvercle 5a ou fond 5b.

Les entrée et sortie de deuxième fluide caloporteur 8, 9 présentent par exemple un embout respectif conformé pour s'insérer dans un tuyau hydraulique par déformation élastique du tuyau pour l'alimentation et le refoulement en deuxième fluide caloporteur.

Selon un exemple de réalisation, le couvercle 5a et le fond 5b sont respectivement munis de moyens de fixation complémentaires, par exemple portés par une partie inférieure de fixation du couvercle 5a et par une partie supérieure de fixation du fond 5b.

Les moyens de fixation complémentaires sont par exemple des moyens de vissage ou des moyens de clipsage pour clipser latéralement le couvercle 5a au fond 5b du boîtier 5.

Selon un exemple de réalisation, les moyens de clipsage complémentaires comportent des ergots 14 saillant latéralement et des encoches 15 complémentaires, coopérant par emboitement élastique latéral, permettant une fixation mutuelle (également appelés moyens de clippage ou moyens d'encliquetage).

Les moyens de fixation complémentaires peuvent être agencés uniquement dans les longueurs du boîtier 5. On prévoit ainsi par exemple sept moyens de fixation complémentaires sur chaque longueur du boîtier 5 (figures 1 et 3).

En outre, l'échangeur thermique 1 comporte un premier joint annulaire 16 interposé entre le couvercle 5a et le fond 5b du boîtier 5.

Selon un exemple de réalisation, une partie de boîtier parmi le fond 5b ou le couvercle 5a présente une extrémité périphérique conformée en U. Une première aile du U porte le moyen de fixation. Le premier joint annulaire 16 est interposé entre la deuxième aile du U et l'extrémité périphérique de l'autre partie de boîtier portant le moyen de fixation complémentaire.

Par exemple et comme mieux visible sur la figure 6, le couvercle 5a présente une extrémité périphérique conformée en U. L'aile extérieure 17a porte le moyen de fixation, par exemple les encoches 15. Le premier joint annulaire 16 est interposé entre l'aile intérieure 17b et l'extrémité périphérique du fond 5b portant l'ergot 14.

La paroi latérale portant l'ergot 14 peut présenter au dos, une face interne conformée pour épouser partiellement la forme torique du premier joint annulaire 16.

Selon un exemple de réalisation, on prévoit que l'échangeur thermique 1 comporte un deuxième joint annulaire 18 interposé entre l'orifice 7 du boitier 5 et les entrée et sortie de premier fluide caloporteur 3, 4.

L'orifice 7 présente par exemple une bordure 19, saillant verticalement. Une rainure annulaire 20 peut être ménagée dans la bordure 19 pour recevoir le deuxième joint annulaire 18 agencé autour de l'embase 6 des entrée et sortie de premier fluide caloporteur 3, 4.

Le boîtier 5 peut également présenter des pattes de fixation 21, par exemple munies d'orifices, pour la fixation de l'échangeur thermique 1 par exemple au moyen de vis.

Selon un exemple d'application montré de manière schématique sur la figure 7, l'échangeur thermique 1 est implanté dans une installation de gestion thermique de batteries de véhicule électrique ou hybride 100. Les entrée et sortie de premier fluide caloporteur 3, 4 sont raccordées à un circuit de climatisation 101 et les entrée et sortie de deuxième fluide caloporteur 8, 9 sont raccordées à un circuit d'eau de refroidissement 102 pour le refroidissement de batteries.

En fonctionnement, l'échangeur thermique 1 permet l'échange thermique entre le premier fluide caloporteur et le deuxième fluide caloporteur. Dans l'exemple, le fluide réfrigérant du circuit de climatisation refroidit l'eau de refroidissement permettant le refroidissement des batteries en captant la chaleur nécessaire au changement de phase par évaporation du premier fluide caloporteur.

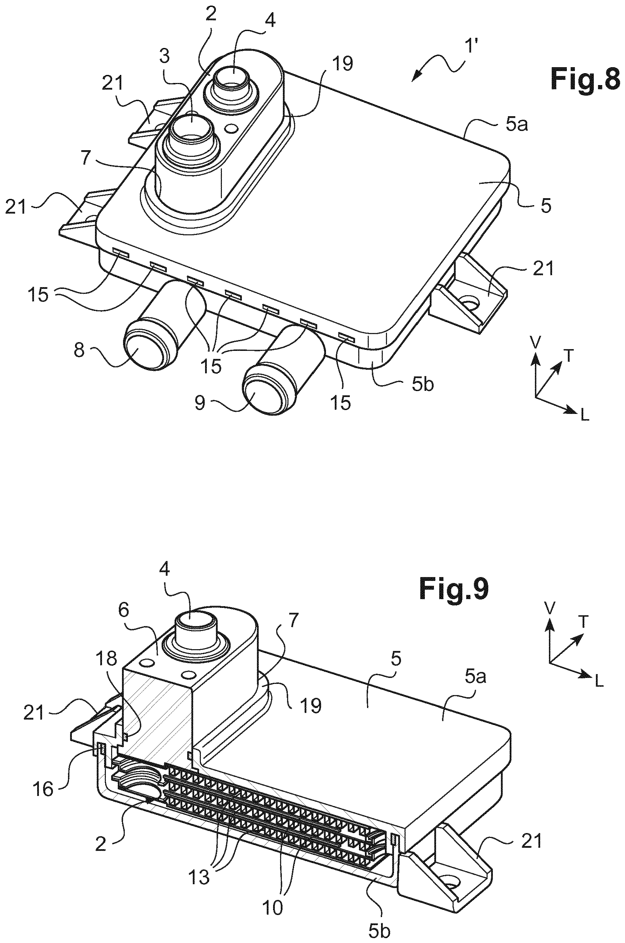

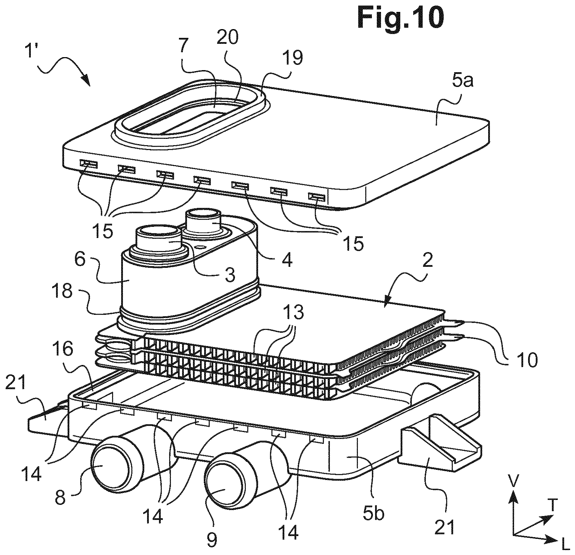

Les figures 8 à 10 représentent un deuxième mode de réalisation.

L'échangeur thermique 1' diffère de celui précédemment décrit en ce que les entrée et sortie de deuxième fluide caloporteur 8, 9 sont ménagées sur une même face latérale du boîtier 5.

Les intercalaires 13 permettent de guider la circulation du deuxième fluide caloporteur depuis l'entrée de deuxième fluide caloporteur 8 vers la sortie de deuxième fluide caloporteur 9.

Ainsi, la circulation du deuxième fluide caloporteur n'est plus naturelle mais forcée en U. On augmente la durée d'écoulement du deuxième fluide caloporteur 8 dans le boîtier 5, ce qui améliore l'échange thermique avec le dispositif de circulation d'un premier fluide caloporteur 2. En revanche, la perte de charge est moins optimisée que dans le premier mode de réalisation.

Le boîtier 5 permet donc une certaine modularité de l'échangeur thermique 1,1'. On peut en effet choisir un boîtier 5 adapté en fonction des contraintes d'implantation notamment en fonction de la pression disponible pour le deuxième fluide caloporteur de façon à privilégier de limiter la perte de charge ou de privilégier la performance thermique.

## Revendications

1. Echangeur thermique (1; 1') comportant un dispositif de circulation d'un premier fluide caloporteur (2) comportant une entrée de premier fluide caloporteur (3) et une sortie de premier fluide caloporteur (4) entre lesquelles un premier fluide caloporteur est destiné à circuler, l'échangeur de chaleur comportant un boîtier (5) recevant le dispositif de circulation du premier fluide caloporteur (2), le boîtier (5) comportant :
- au moins un orifice (7) pour le passage des entrée et sortie de premier fluide caloporteur (3, 4) du dispositif de circulation d'un premier fluide caloporteur (2),
- une entrée de deuxième fluide caloporteur (8) et une sortie de deuxième fluide caloporteur (9) entre lesquelles un deuxième fluide caloporteur est destiné à circuler,
le boîtier (5) comportant un couvercle (5a) et un fond (5b) respectivement munis de moyens de fixation complémentaires, et **caractérisé en ce que** le boîtier comporte un premier joint annulaire (16) interposé entre le couvercle (5a) et le fond (5b) du boîtier (5),une partie de boîtier parmi le fond (5b) ou le couvercle (5a) présentant une extrémité périphérique conformée en U, une première aile du U portant le moyen de fixation, le premier joint annulaire (16) étant interposé entre la deuxième aile du U et l'extrémité périphérique de l'autre partie de boîtier (5a, 5b) portant le moyen de fixation complémentaire,
le boîtier comportant un deuxième joint annulaire (18) interposé entre l'orifice (7) du boitier (5) et les entrée et sortie de premier fluide caloporteur (3, 4) du dispositif de circulation d'un premier fluide caloporteur (2).

2. Echangeur thermique (1 ; 1') selon la revendication précédente, **caractérisé en ce que** le dispositif de circulation d'un premier fluide caloporteur (2) comporte au moins deux tubes d'échange thermique (10) superposés.

3. Echangeur thermique (1 ; 1') selon la revendication précédente, **caractérisé en ce que** le tube d'échange thermique (10) forme au moins un demi-tour, le premier fluide caloporteur étant destiné à circuler en parallèle dans les tubes d'échange thermique (10) superposés.

4. Echangeur thermique (1 ; 1') selon la revendication précédente, **caractérisé en ce que** les tubes d'échange thermique (10) sont plats.

5. Echangeur thermique (1 ; 1') selon l'une des revendications précédentes, **caractérisé en ce que** le dispositif de circulation d'un premier fluide caloporteur (2) comporte au moins :
- une intercalaire (13) interposée entre deux tubes d'échange thermiques (10) superposés du dispositif de circulation d'un premier fluide caloporteur (2), et/ou
- une intercalaire (13) interposée entre un tube d'échange thermique (10) et le couvercle (5a) ou le fond (5b) du boîtier (5).

6. Echangeur thermique (1 ; 1') selon la revendication précédente, **caractérisé en ce que** l'intercalaire (13) présente une forme générale ondulée.

7. Echangeur thermique (1 ; 1') selon l'une des revendications 5 ou 6, **caractérisé en ce que** l'intercalaire (13) est en contact avec un tube d'échange thermique (10) inférieur et/ou supérieur le long d'une pluralité de lignes rectilignes et parallèles.

8. Echangeur thermique (1 ; 1') selon l'une des revendications précédentes, **caractérisé en ce que** le au moins un orifice (7) pour le passage des entrée et sortie de premier fluide caloporteur (3, 4) est ménagé sur une face du boîtier (5) perpendiculaire à une face latérale dans laquelle sont ménagées l'entrée et/ou la sortie de deuxième fluide caloporteur (8, 9).

9. Echangeur thermique (1) selon l'une des revendications précédentes, **caractérisé en ce que** les entrée et sortie de deuxième fluide caloporteur (8, 9) sont ménagées entre des faces latérales opposées du boîtier (5).

10. Echangeur thermique (1') selon l'une des revendications 1 à 8, **caractérisé en ce que** les entrée et sortie de deuxième fluide caloporteur (8, 9) sont ménagées sur une même face latérale du boîtier (5).

11. Echangeur thermique (1 ; 1') selon l'une des revendications précédentes, **caractérisé en ce que** les moyens de fixation complémentaires sont des moyens de clipsage.

12. Installation de gestion thermique (100) pour batteries de véhicule électrique ou hybride, **caractérisée en ce qu'**elle comporte un échangeur thermique (1 ; 1') selon l'une des revendications précédentes dont :
- les entrée et sortie de premier fluide caloporteur (3, 4) sont raccordées à un circuit de climatisation (101),
- les entrée et sortie de deuxième fluide caloporteur (8, 9) sont raccordées à un circuit d'eau de refroidissement (102) pour le refroidissement de batteries.

## Patentansprüche

1. Wärmeaustauscher (1; 1'), welcher eine Vorrichtung zur Zirkulation eines ersten Wärmeträgerfluids (2) aufweist, die einen Einlass eines ersten Wärmeträgerfluids (3) und einen Auslass eines ersten Wärmeträgerfluids (4) aufweist, zwischen denen ein erstes Wärmeträgerfluid zirkulieren soll, wobei der Wärmeaustauscher ein Gehäuse (5) aufweist, das die Vorrichtung zur Zirkulation des ersten Wärmeträgerfluids (2) aufnimmt, wobei das Gehäuse (5) aufweist:
- wenigstens eine Öffnung (7) für den Durchgang des Einlasses und des Auslasses des ersten Wärmeträgerfluids (3, 4) der Vorrichtung zur Zirkulation eines ersten Wärmeträgerfluids (2),
- einen Einlass eines zweiten Wärmeträgerfluids (8) und einen Auslass eines zweiten Wärmeträgerfluids (9), zwischen denen ein zweites Wärmeträgerfluid zirkulieren soll,
wobei das Gehäuse (5) einen Deckel (5a) und einen Boden (5b) aufweist, die jeweils mit zusätzlichen Befestigungsmitteln versehen sind, und
**dadurch gekennzeichnet, dass** das Gehäuse einen ersten Dichtring (16) aufweist, der zwischen dem Deckel (5a) und dem Boden (5b) des Gehäuses (5) angeordnet ist, wobei ein aus dem Boden (5b) und dem Deckel (5a) ausgewählter Teil des Gehäuses ein U-förmig gestaltetes Umfangsende aufweist, wobei ein erster Schenkel des "U" das Befestigungsmittel trägt, wobei der erste Dichtring (16) zwischen dem zweiten Schenkel des "U" und dem Umfangsende des anderen Teils des Gehäuses (5a, 5b) angeordnet ist, welcher das zusätzliche Befestigungsmittel trägt,
wobei das Gehäuse einen zweiten Dichtring (18) aufweist, der zwischen der Öffnung (7) des Gehäuses (5) und dem Einlass und Auslass des ersten Wärmeträgerfluids (3, 4) der Vorrichtung zur Zirkulation eines ersten Wärmeträgerfluids (2) angeordnet ist.

2. Wärmeaustauscher (1; 1') nach dem vorhergehenden Anspruch, **dadurch gekennzeichnet, dass** die Vorrichtung zur Zirkulation eines ersten Wärmeträgerfluids (2) wenigstens zwei übereinander angeordnete Wärmeaustauschrohre (10) aufweist.

3. Wärmeaustauscher (1; 1') nach dem vorhergehenden Anspruch, **dadurch gekennzeichnet, dass** das Wärmeaustauschrohr (10) wenigstens eine U-förmige Wende bildet, wobei das erste Wärmeträgerfluid dazu bestimmt ist, in den übereinander angeordneten Wärmeaustauschrohren (10) parallel zu zirkulieren.

4. Wärmeaustauscher (1; 1') nach dem vorhergehenden Anspruch, **dadurch gekennzeichnet, dass** die Wärmeaustauschrohre (10) flach sind.

5. Wärmeaustauscher (1; 1') nach einem der vorhergehenden Ansprüche, **dadurch gekennzeichnet, dass** die Vorrichtung zur Zirkulation eines ersten Wärmeträgerfluids (2) wenigstens aufweist:
- ein Zwischenstück (13), das zwischen zwei übereinander angeordneten Wärmeaustauschrohren (10) der Vorrichtung zur Zirkulation eines ersten Wärmeträgerfluids (2) angeordnet ist, und/oder
- ein Zwischenstück (13), das zwischen einem Wärmeaustauschrohr (10) und dem Deckel (5a) oder dem Boden (5b) des Gehäuses (5) angeordnet ist.

6. Wärmeaustauscher (1; 1') nach dem vorhergehenden Anspruch, **dadurch gekennzeichnet, dass** das Zwischenstück (13) eine gewellte allgemeine Form aufweist.

7. Wärmeaustauscher (1; 1') nach einem der Ansprüche 5 oder 6, **dadurch gekennzeichnet, dass** das Zwischenstück (13) entlang mehrerer gerader und paralleler Linien in Kontakt mit einem unteren und/oder oberen Wärmeaustauschrohr (10) steht.

8. Wärmeaustauscher (1; 1') nach einem der vorhergehenden Ansprüche, **dadurch gekennzeichnet, dass** die wenigstens eine Öffnung (7) für den Durchgang des Einlasses und des Auslasses des ersten Wärmeträgerfluids (3, 4) auf einer Seite des Gehäuses (5) ausgebildet ist, die senkrecht zu einer Seitenfläche ist, in welcher der Einlass und/oder der Auslass des zweiten Wärmeträgerfluids (8, 9) angeordnet sind.

9. Wärmeaustauscher (1) nach einem der vorhergehenden Ansprüche, **dadurch gekennzeichnet, dass** der Einlass und der Auslass des zweiten Wärmeträgerfluids (8, 9) zwischen einander gegenüberliegenden Seitenflächen des Gehäuses (5) ausgebildet sind.

10. Wärmeaustauscher (1') nach einem der Ansprüche 1 bis 8, **dadurch gekennzeichnet, dass** der Einlass und der Auslass des zweiten Wärmeträgerfluids (8, 9) auf ein und derselben Seitenfläche des Gehäuses (5) ausgebildet sind.

11. Wärmeaustauscher (1; 1') nach einem der vorhergehenden Ansprüche, **dadurch gekennzeichnet, dass** die zusätzlichen Befestigungsmittel Einrastmittel sind.

12. Anlage zum Thermomanagement (100) für Batterien eines Elektro- oder Hybridfahrzeugs, **dadurch gekennzeichnet, dass** sie einen Wärmeaustauscher (1; 1') nach einem der vorhergehenden Ansprüche aufweist,
- dessen Einlass und Auslass des ersten Wärmeträgerfluids (3, 4) an eine Klimaanlage (101) angeschlossen sind,
- dessen Einlass und Auslass des zweiten Wärmeträgerfluids (8, 9) an einen Kühlerwasserkreis (102) zur Kühlung von Batterien angeschlossen sind.

## Claims

1. Heat exchanger (1; 1') including a circulation device (2) for a first heat-transfer fluid including a first-heat-transfer-fluid inlet (3) and a first-heat-transfer-fluid outlet (4) between which a first heat-transfer fluid is designed to flow, the heat exchanger including a housing (5) containing the circulation device (2) for the first heat-transfer fluid, the housing (5) including:
- at least one opening (7) designed to be traversed by the first-heat-transfer-fluid inlet and outlet (3, 4) of the circulation device (2) for a first heat-transfer fluid,
- a second-heat-transfer-fluid inlet (8) and a second-heat-transfer-fluid outlet (9) between which a second heat-transfer fluid is designed to flow,
the housing (5) having a cover (5a) and a bottom (5b) that are each provided with complementary attachment means, and **characterized in that** the housing includes a first ring seal (16) interposed between the cover (5a) and the bottom (5b) of the housing (5), one part of the housing, either the bottom (5b) or the cover (5a), having a U-shaped peripheral end, a first arm of the U bearing the attachment means, the first ring seal (16) being interposed between the second arm of the U and the peripheral end of the other part (5a, 5b) of the housing bearing the complementary attachment means,
the housing having a second ring seal (18) interposed between the opening (7) in the housing (5) and the first-heat-transfer-fluid inlet and outlet (3, 4) of the circulation device (2) for a first heat-transfer fluid.

2. Heat exchanger (1; 1') according to the preceding claim, **characterized in that** the circulation device (2) for a first heat-transfer fluid has at least two superimposed heat-exchange tubes (10).

3. Heat exchanger (1; 1') according to the preceding claim, **characterized in that** the heat-exchange tube (10) forms at least one half turn, the first heat-transfer fluid being designed to flow in parallel in the superimposed heat-exchange tubes (10).

4. Heat exchanger (1; 1') according to the preceding claim, **characterized in that** the heat-exchange tubes (10) are flat.

5. Heat exchanger (1; 1') according to one of the preceding claims, **characterized in that** the circulation device (2) for a first heat-transfer fluid has at least:
- one insert (13) interposed between two superimposed heat-exchange tubes (10) of the circulation device (2) for a first heat-transfer fluid, and/or
- one insert (13) interposed between a heat-exchange tube (10) and the cover (5a) or the bottom (5b) of the housing (5).

6. Heat exchanger (1; 1') according to the preceding claim, **characterized in that** the insert (13) has an overall corrugated shape.

7. Heat exchanger (1; 1') according to either of Claims 5 and 6, **characterized in that** the insert (13) is in contact with a lower and/or upper heat-exchange tube (10) along a plurality of straight parallel lines.

8. Heat exchanger (1; 1') according to one of the preceding claims, **characterized in that** the at least one opening (7) designed to be traversed by the first-heat-transfer-fluid inlet and outlet (3, 4) is arranged on one face of the housing (5) that is perpendicular to a lateral face in which the second-heat-transfer-fluid inlet and/or outlet (8, 9) are arranged.

9. Heat exchanger (1) according to one of the preceding claims, **characterized in that** the second-heat-transfer-fluid inlet and outlet (8, 9) are arranged between opposing lateral faces of the housing (5).

10. Heat exchanger (1') according to one of Claims 1 to 8, **characterized in that** the second-heat-transfer-fluid inlet and outlet (8, 9) are arranged on a single lateral face of the housing (5).

11. Heat exchanger (1; 1') according to one of the preceding claims, **characterized in that** the complementary attachment means are snap-fitting means.

12. Thermal management facility (100) for batteries of electric or hybrid vehicles, **characterized in that** it includes a heat exchanger (1; 1') according to one of the preceding claims, in which:
- the first-heat-transfer-fluid inlet and outlet (3, 4) are connected to an air-conditioning circuit (101),
- the second-heat-transfer-fluid inlet and outlet (8, 9) are connected to a cooling water circuit (102) for cooling the batteries.
